# EUROPÄISCHE PATENTSCHRIFT

(11) **EP 0 689 277 B1**
(45) Veröffentlichungstag und Bekanntmachung des Hinweises auf die Patenterteilung: **11.02.1998**
(21) Anmeldenummer: 95109296.4
(22) Anmeldetag: 16.06.1995
(51) Int. Cl.: H02K 7/08, B41F 13/004, B41F 13/14, H02K 7/14

(54) **Anordnung eines Elektromotors zum Antrieb eines Drehkörpers**
Electro-motor for driving a rotational body
Moteur électrique pour entraîner un corps rotatif

(30) Priorität: 24.06.1994 DE 4422097
(43) Veröffentlichungstag der Anmeldung: 27.12.1995
(73) Patentinhaber: MAN Roland Druckmaschinen AG, 63012 Offenbach (DE)
(72) Erfinder: Fischer, Sven, D-08523 Plauen (DE)
(74) Vertreter: Schober, Stefan

(56) Entgegenhaltungen:
- EP-A- 0 405 249
- EP-A- 0 521 577
- DE-U- 9 306 369
- US-A- 3 945 266

## Beschreibung

Die Erfindung betrifft eine Anordnung eines Elektromotors zum Antrieb eines Drehkörpers nach dem Oberbegriff von Anspruch 1.

Aus der DE 41 38 479 C2 ist eine derartige Anordnung bekannt, bei der der Drehkörper innerhalb der Wandung mit exzentrisch ausgelenkt geführter Drehachse drehgelagert ist und eine Nachführeinrichtung auf den an der Wandung steif und ortsfest abgestützten Stator dergestalt einwirkend angeordnet ist, daß er die Drehkörper/Rotorverstellbewegung entsprechend nachvollzieht. Schließlich ist der mit dem Drehkörper fest verbundene Rotor gegenüber dem ortfesten Stator axial verschiebbar gestaltet.

Der Nachteil der genannten Anordnung ist, daß insbesondere die Nachführeinrichtung für den Stator einen relativ großen technischen Aufwand erfordert und der Elektromotor dem Anwendungsfall angepaßt speziell gestaltet werden muß.

Der Erfindung liegt die Aufgabe zugrunde, eine Anordnung eines Elektromotors zum Antrieb eines Drehkörpers gemäß dem Oberbegriff von Anspruch 1 zu schaffen, die in einfacher Weise mit geringem Aufwand die Verstellbarkeit des Drehkörpers, insbesondere die Druckan- und -abstellung und die Seiten- und Diagonalregisterverstellungen eines Druckzylinders ermöglicht. Die Aufgabe wird durch die kennzeichnenden Merkmale von Anspruch 1 erfüllt.

Die Erfindung ermöglicht in einfacher Weise ein radiales Verschwenken des Drehkörpers, insbesondere die Druckan- und -abstellung eines Druckzylinders, sowie die axiale Verschiebung des Drehkörpers und Schiefstellung dessen Drehachse, insbesondere zur Verstellung des Seiten- und Diagonalregisters des Druckzylinders.

Weitere vorteilhafte Ausgestaltungen der Erfindung sind in den Unteransprüchen enthalten.

Die Erfindung wird nachfolgend an einem Ausführungsbeispiel näher erläutert. In den zugehörigen Zeichnungen in schematischer Darstellung:
- Fig. 1:: zwei einzeln durch jeweils einen Elektromotor angetriebene Druckzyzylinder eines Druckwerkes
- Fig. 2:: ein aus 8 Druckzylindern bestehendes Druckwerk für einen indirekten, maximal zweiseitigen doppelten Druck
- Fig. 3:: eine den Stator des Elektromotors mit der Wandung verbindende Drehmomentenstütze
- Fig. 4:: Ansicht X von Fig. 3, 90° gedreht
- Fig. 5:: eine Variante gemäß Fig. 3

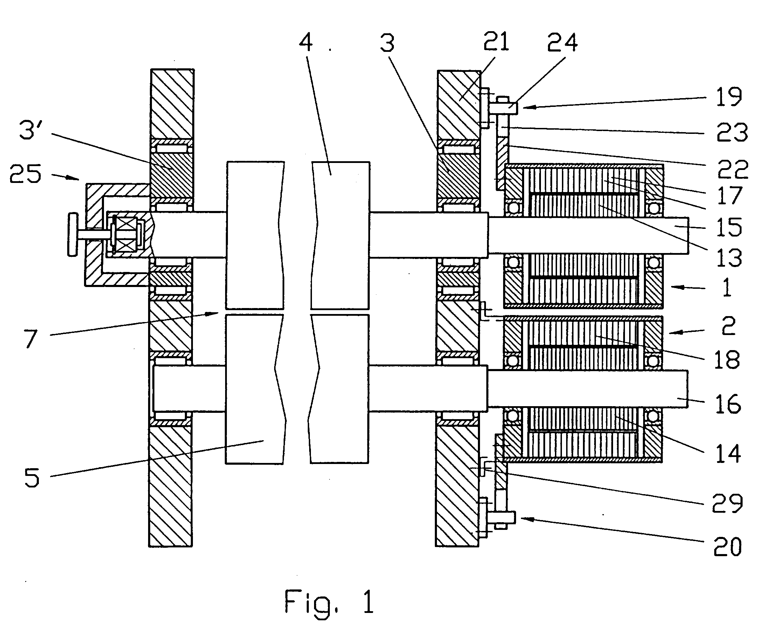

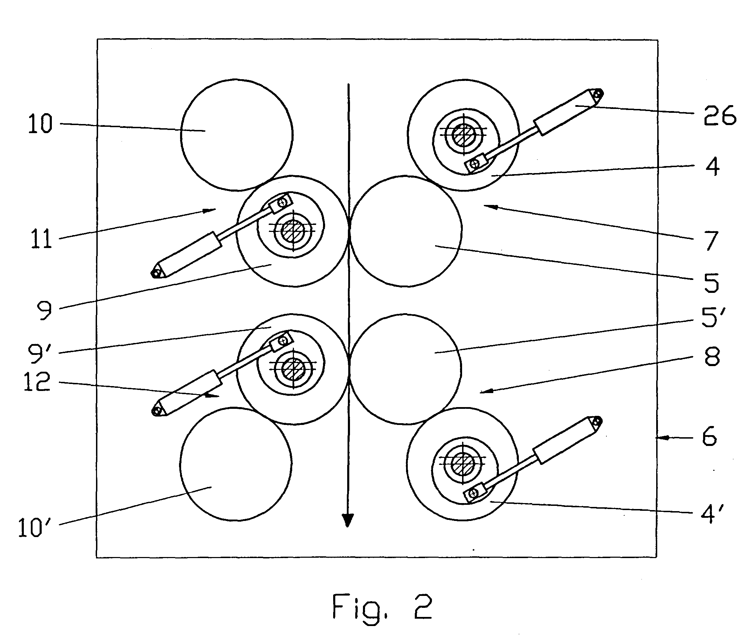

Fig. 1 zeigt zwei jeweils von einem Elektromotor 1; 2 einzeln regelbar angetriebene, einmal als mit Hilfe einer Exzenterbuchse 3 druckan- und -abstellbarer Formzylinder 4 und zum anderen als ortsfest gelagerter Übertragungszylinder 5 gestaltete Druckzylinder eines Druckwerkes 6 gemäß der oberen rechten Zylindergruppe 7 von Fig. 2.

Die nachfolgenden Erläuterungen sind auf die gleich gestaltete untere rechte Zylindergruppe 8 und die zwei linken, abweichend jeweils mit einem druckan- und -abstellbaren Übertragungszylinder 9; 9' und einem ortsfest gelagerten Formzylinder 10; 10' ausgestatteten Zylindergruppen 11; 12 übertragbar (Fig. 2).

Die Elektromotoren 1; 2 sind jeweils mit ihrem Rotor 13; 14 auf dem Zapfen 15; 16 des Formzylinders 4; 4' bzw. Übertragungszylinders 5; 5' befestigt und mit ihrem Stator 17; 18 über eine Drehmomentenstütze 19; 20 eine radiale und axiale Verstellung sowie veränderbare Schiefstellung des jeweiligen Druckzylinders als dessen Druckan- und -abstellung, Seitenregister- sowie Diagonalregisterverstellung ermöglichend mit der Wandung 21 verbunden (Fig. 1).

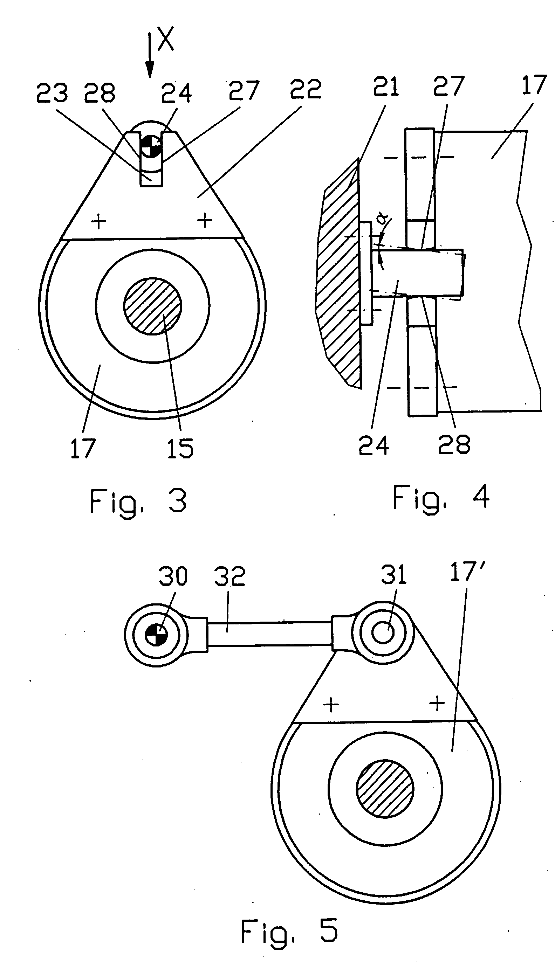

Gemäß Fig. 3 ist der Stator 17 in Gestalt eines an ihm befestigten Ansatzstückes 22 mit einer radial verlaufenden Führung 23 ausgestattet, in die ein an der Wandung 21 befestigter Bolzen 24 in Richtung der axialen Verstellung des Druckzylinders eingreift (Fig. 1). Damit wird in einfacher Weise sowohl die Verstellung des Seitenregisters des Formzylinders 4 mit Hilfe eines in Fig. 1 dargestellten Stelltriebes 25 als auch die Druckan- und -abstellung durch eine beiderseitige Verdrehung der Exzenterbuchsen 3; 3' mit Hilfe eines druckmittelbetriebenen Arbeitszylinders 26 (Fig. 2) ermöglicht, wobei stellmittelbedingt die Radialbewegung des Stators 17 von einer Schwenkbewegung überlagert ist.

Auch kann durch eine geregelte unterschiedliche Verdrehung der Exzenterbuchsen 3; 3' auf beiden Seiten des Formzylinders 4 eine Verstellung des Diagonalregisters vorgenommen werden (Fig. 1). Um die damit verbundene Schiefstellung α des Stators 17 zu ermöglichen, sind die beiden Führungsflächen 27; 28 für den Bolzen 24 gekrümmt (Fig. 4).

In Fig. 1 besteht die Möglichkeit, den Übertragungszylinder 5 mit dem Formzylinder 4 durch eine nicht darstellte mechanische oder elektromotorische Verstellung beider Druckzylinder für eine ständige deckungsgleiche Farbübertragung synchron seitlich zu verschieben. Dies ist jedoch für den gängigen Offsetdruck nicht erforderlich, so daß gemäß strichpunktierter Darstellung der Stator 18 unter Einsparung der Drehmomentenstütze 20 über einen Flansch 29 an der Wandung 21 befestigt werden kann.

Fig. 5 zeigt als Variante eine Drehmomentenstütze, bei der der Stator 17' über eine in zwei Kugelgelenken 30; 31 gelagerte Koppel 32 mit der Wandung verbunden ist.

## Patentansprüche

1. Anordnung eines Elektromotors (1; 2) zum Antrieb eines Drehkörpers, insbesondere als Druckzylinder einer Rotationsdruckmaschine, der bezüglich seiner Drehachse radial, axial und schräg oder in wahlweiser Kombination dieser Bewegungsrichtungen verstellbar in einer Wandung (21) drehgelagert ist, wobei der Rotor (13; 14) des Elektromotors (1; 2) mit dem Drehkörper zu dessen Direktantrieb starr verbunden ist, gekennzeichnet dadurch, daß der Stator (17; 17'; 18) des Elektromotors (1; 2) über eine die Verstellbewegungen des Drehkörpers ermöglichende Drehmomentenstütze (19; 20) mit der Wandung (21) verbunden ist.

2. Anordnung nach Anspruch 1, gekennzeichnet dadurch, daß der Stator (17; 18) mit einer radialen Führung (23) ausgestattet ist, in die ein mit der Wandung (21) fest verbundener Bolzen (24) in Richtung der axialen Verstellbewegung des Drehkörpers eingreift.

3. Anordnung nach Anspruch 2, gekennzeichnet dadurch, daß die Führungsflächen (27; 28) für den Bolzen (24) eine schräge Verstellung des Drehkörpers ermöglichend gekrümmt sind.

4. Anordnung nach Anspruch 1, gekennzeichnet dadurch, daß der Stator (17') über eine Koppel (32) an die Wandung angelenkt ist.

5. Anordnung nach Anspruch 4, gekennzeichnet dadurch, daß die Gelenke der Koppel (32) deren räumliches Verschwenken ermöglichend, insbesondere als Kugelgelenke (30; 31) ausgebildet sind.

## Claims

1. Arrangement of an electric motor (1, 2) for driving a rotating body, in particular as an impression cylinder in a rotary printing machine, which is mounted for rotation in a wall (21) so as to be adjustable radially, axially and obliquely with respect to its axis of rotation, or in any desired combination of these directions of movement, the rotor (13, 14) of the electric motor (1, 2) being fixedly connected to the rotating body to drive it directly, characterised in that the stator (17; 17'; 18) of the electric motor (1; 2) is connected to the wall (21) via a torque support (19; 20) which makes possible the adjustment movements of the rotating body.

2. Arrangement according to claim 1, characterised in that the stator (17; 18) is equipped with a radial guide (23) into which a pin (24), fixedly connected to the wall (21), engages in the direction of the axial adjustment movement of the rotating body.

3. Arrangement according to claim 2, characterised in that the guide surfaces (27; 28) for the pin (24) are curved, making possible an inclined adjustment of the rotating body.

4. Arrangement according to claim 1, characterised in that the stator (17') is pivotedly attached to the wall by means of a connecting rod (32).

5. Arrangement acording to claim 4, characterised in that the joints of the connecting rod (32) are constructed in particular as ball-and-socket joints (30; 31), making possible its spatial adjustment.

## Revendications

1. Agencement d'un moteur électrique (1; 2) destiné à entraîner un corps rotatif, consistant notamment en un cylindre d'impression d'une presse rotative à imprimer, qui est monté tournant dans une paroi (21) avec la possibilité de se déplacer, par rapport à son axe de rotation, de manière radiale, axiale et oblique ou dans une combinaison facultative de ces directions de déplacement, le rotor (13; 14) du moteur électrique (1; 2) étant relié de manière rigide avec le corps rotatif pour assurer son entraînement direct, caractérisé en ce que le stator (17; 17'; 18) du moteur électrique (1; 2) est relié à la paroi (21) par l'intermédiaire d'un support de couple de rotation (19; 20) rendant possible le mouvement de déplacement du corps de rotation.

2. Agencement selon la revendication 1, caractérisé en ce que le stator (17; 18) est muni d'un dispositif de guidage radial (23), dans lequel un tourillon (24) solidaire de la cloison (21) vient en prise dans le sens du mouvement de déplacement axial du corps rotatif.

3. Agencement selon la revendication 2, caractérisé en ce que les surfaces de guidage (27; 28) du tourillon (24) sont recourbées, permettant ainsi un déplacement oblique du corps rotatif.

4. Agencement selon la revendication 1, caractérisé en ce que le stator (17') est monté articulé sur la paroi par l'intermédiaire d'une barre d'accouplement (32).

5. Agencement selon la revendication 4, Caractérisé en ce que les articulations de la barre d'accouplement (32) sont réalisées notamment sous la forme de joints à rotule (30; 31), permettant le pivotement de celles-ci dans l'espace.
